# EUROPEAN PATENT APPLICATION

(11) **EP 1 340 727 A1**
(43) Date of publication of application: **03.09.2003**
(21) Application number: 03290224.9
(22) Date of filing: 29.01.2003
(51) Int. Cl.: C03C 25/12, C03C 25/18, C03B 37/027

(54) **Manufacturing method of optical fiber**

(30) Priority: 06.02.2002 JP 2002029728
(71) Applicant: FUJIKURA LTD., Kohtoh-ku Tokyo (JP)
(72) Inventor: Azegami, Koji, c/o Fujikura Ltd., Sakura-shi, Chiba-ken (JP); Fujimaki, Munehisa, c/o Fujikura Ltd., Sakura-shi, Chiba-ken (JP)
(74) Representative: Loisel, Bertrand

(57) **Abstract**

The present invention provides a manufacturing method of optical fiber that improves the adherence between a coating and a bare optical fiber composed of silica glass during the formation of the coating on the bare optical fiber in high-speed drawing of optical fiber. In this method, the temperature of the bare optical fiber prior to being introduced into a coating material in the coating apparatus is made to be between 60 and 110°C. The bare optical fiber is cooled by blowing cooling gas onto that prior to being introduced into the coating material in the coating apparatus. Furthermore, during cooling of bare optical fiber, at least two types of cooling gases having different coefficients of thermal conductivity are mixed and blown onto the bare optical fiber.
In addition, the temperature of the bare optical fiber is made to be within a prescribed range by changing the mixing ratio of the cooling gas.

## Description

### BACKGROUND OF THE INVENTION

### Field of the Invention

The present invention relates to a manufacturing method of optical fiber in which an optical fiber is obtained by forming a coating on a bare optical fiber composed of silica glass.

### Description of the Related Art

One of the elements that has a considerable effect on the temperature characteristics, environmental characteristics, handling ease and so forth of optical fibers is the adherence between the silica glass that forms a bare optical fiber and the coating composed of a resin or other coating material.

When an optical fiber is exposed to a low-temperature environment with poor adherence between the bare optical fiber and coating, the coating material that forms the coating delaminate considerably, then separates from the bare optical fiber. At this time, considerable force acts in the direction of the central axis of the bare optical fiber due to the difference in the coefficients of thermal expansion between the silica glass and coating material such as the resin. Due to this force, minute bends referred to as microbends form in the optical fiber. These microbends cause an increase in the absorption loss of the optical fiber.

Therefore, a silane coupling agent is added to the coating material that forms the coating in order to ensure adequate adhesive strength between the bare optical fiber and coating. Silane coupling agents are additives that improve the affinity and adhesiveness between resins and inorganic substances. It is said that the adhesive force between the bare optical fiber and coating material is thought to increase due to the formation of hydrogen bonds between the OH groups of the silane coupling agent and the oxygen atoms contained in the silica glass.

One of the conditions required for promoting the reaction of the silane coupling agent is a temperature that is suitable for the reaction of the silane coupling agent.

However, the development of high-speed drawing technology of the optical fiber makes the time for curing the coating material that forms the coating shorter. As a result, curing of this coating material tends to be insufficient, and a decrease in the adhesive strength between the bare optical fiber and coating will happen. In addition, the time required for relaxation of disturbances which appear on the surface of the coating material becomes to be not enough due to high-speed drawing, therefore since this coating material is cured before the surface of the coating material becomes smooth, there is the problem that bubbles are trapped in the coating easily.

### SUMMARY OF THE INVENTION

In consideration of the above circumstances, the present invention provides a manufacturing method of optical fiber that improves adherence between the coating and a bare optical fiber when forming the coating on the bare optical fiber composed of silica glass in high-speed drawing of the optical fiber.

The above problems can be solved by a manufacturing method of optical fiber comprising steps of: introducing a bare optical fiber composed of silica glass into a coating material in the coating apparatus, coating a coating material including a coupling agent onto the bare optical fiber in the coating apparatus, and forming a coating by curing the coating material; wherein, the temperature of the bare optical fiber prior to introduction into the coating material in the coating apparatus is between 60 and 110°C.

The above manufacturing method is also preferably provided with a cooling step that cools the bare optical fiber prior to introduction into the coating material in the coating apparatus.

### BRIEF DESCRIPTION OF THE DRAWINGS

FIG. 1 is a schematic drawing which shows an example of a manufacturing apparatus for optical fiber.
FIG. 2A is a schematic drawing which shows a front view of an optical fiber on a clamping jig for explaining the method for measuring the pull out force of the optical fiber.
FIG. 2B is a schematic drawing which shows an overhead view of the optical fiber on the clamping jig for explaining the method for measuring the pull out force of the optical fiber.

### DESCRIPTION OF THE PREFERRED EMBODIMENTS

The following provides a detailed explanation of the present invention.

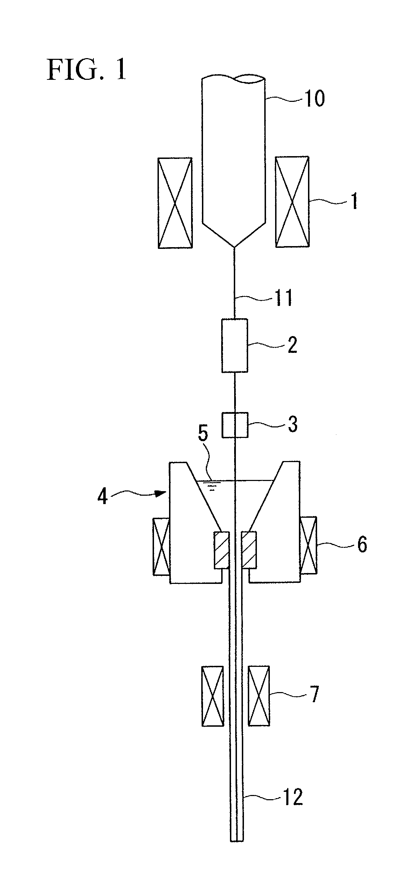

FIG. 1 is a schematic drawing which shows an example of a manufacturing apparatus for optical fiber.

In order to manufacture optical fiber using this apparatus, optical fiber perform 10 composed of silica glass is first provided in a drawing furnace 1 and drawing is performed in accordance with ordinary methods to obtain bare optical fiber 11 composed of silica glass. Next, this bare optical fiber 11 is fed to a cooling cylinder 2, and the bare optical fiber 11 is cooled by cooling gas introduced into this cooling cylinder 2. Next, before this cooled bare optical fiber 11 is introduced into a coating material in the coating apparatus 4 of a later stage, the temperature of the bare optical fiber 11 is measured with a temperature measuring instrument 3. Next, the cooled bare optical fiber 11 is introduced into a coating material 5 in the coating apparatus 4. The material is an ultraviolet-cured resin containing a silane coupling agent and has been adjusted to a suitable temperature with a heater 6, and is coated onto a surface of the bare optical fiber 11. Next, the coating material is cured by ultraviolet rays in a coating material curing apparatus 7 composed of an ultraviolet lamp and optical fiber 12 is manufactured.

The optical fiber 12 manufactured in this manner has its direction changed by passing over a turn pulley (not shown), and after sequentially passing through a take-up machine (not shown) and dancer (not shown), is wound by a winding apparatus (not shown).

In the manufacturing method of optical fiber of the present invention, the temperature of the bare optical fiber 11 prior to being introduced into the coating material in the coating apparatus 4 is preferably between 60 and 110°C, and more preferably between 70 and 100°C.

Since the bare optical fiber 11 is introduced into the coating material in the coating apparatus 4 with its temperature within the above range, the reactivity of the silane coupling agent is improved, and the coupling reaction between the silane coupling agent and the surface of the bare optical fiber 11 composed of silica glass is promoted, resulting in a considerable increase in the adhesive force between them. In addition, as a result of making the temperature of the bare optical fiber 11 within the above range, surface tension of the coating material decreases at the contact surface between the bare optical fiber 11 and coating material due to the radiant heat of the bare optical fiber 11. As a result, disturbances of the surface of the coating material that have occurred due to high-speed coating are relaxed, and the coating material is coated smoothly by making contact with the surface of the bare optical fiber 11, thereby making it difficult for bubbles to be trapped within the coating.

If the temperature of the bare optical fiber 11 prior to being introduced into the coating material in the coating apparatus 4 is less than 60°C, the reactivity of the silane coupling agent is not improved, and the coupling reaction between the silane coupling agent and the surface of the bare optical fiber 11 is not promoted. On the other hand, if the above temperature exceeds 110°C, sliding occurs between the coating material and bare optical fiber 11, making it difficult for the coating material to be uniformly coated onto the surface of the bare optical fiber 11. In addition, eccentricity occurs from the central axis of the bare optical fiber 11 within the optical fiber 12, and adjustments for correcting that become difficult.

In addition, the manufacturing method of the optical fiber of the present invention is provided with a cooling step in which the bare optical fiber 11 is cooled prior to being introduced into the coating material in the coating apparatus 4 in order to make the temperature of the bare optical fiber 11 within the above range. The drawing temperature of the bare optical fiber 11 is a high temperature of 2000°C and above, and the temperature of the bare optical fiber 11 cannot be made to be within the above prescribed temperature range in the state following drawing. Therefore, it is necessary to forcibly cool the bare optical fiber 11 following drawing to within the prescribed temperature range.

Cooling of bare optical fiber 11 in the cooling step is carried out feeding bare optical fiber 11 into cooling cylinder 2, and blowing cooling gas introduced into this cooling cylinder 2 onto bare optical fiber 11. More specifically, in this cooling step, by mixing at least two types of cooling gases having different coefficients of thermal conductivity and blowing them into bare optical fiber 11, bare optical fiber 11 is cooled and its temperature is made to be within a prescribed temperature range. Examples of cooling gases used here include helium (He), nitrogen (N₂), argon (Ar) and carbon dioxide gas (CO₂). The use of a mixture of helium (He) and nitrogen (N₂) is particularly preferable due to its superior cooling efficiency.

Moreover, by changing the mixing ratio of the above cooling gas, the temperature of the bare optical fiber 11 prior to being introduced into the coating material in the coating apparatus 4 can be made to be within a prescribed temperature range. For example, by changing the mixing ratio of a cooling gas consisting of a mixture of helium (He) and nitrogen (N₂) from 95:5 to 50:50 (percent by volume), the temperature of the bare optical fiber 11 can be made to be within a prescribed temperature range.

In addition, the temperature of the bare optical fiber 11 after cooling is measured with the temperature measuring instrument 3, and the flow rate of cooling gas that is introduced into the cooling cylinder 2 is controlled based on that measurement result to make the temperature of the bare optical fiber 11 to be within a prescribed temperature range.

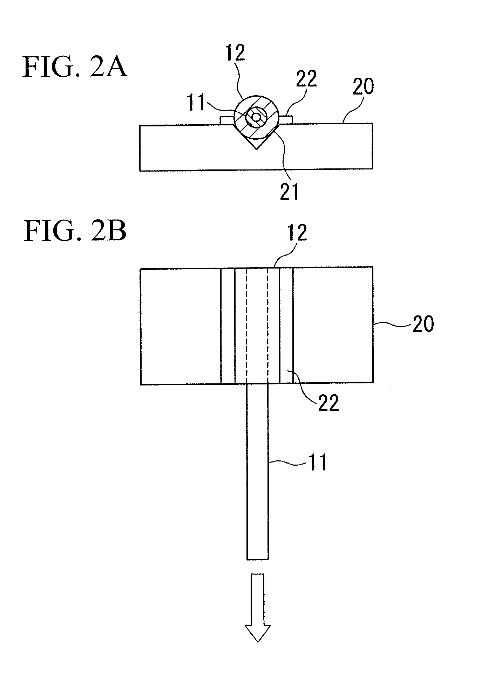

The following clarifies the effects of the present invention by indicating specific embodiments using FIGS. 1 and 2.

### Embodiment 1

Melt drawing was carried out using optical fiber preform 10 composed of silica glass, bare optical fiber 11 taken out of a drawing furnace 1 was introduced into a cooling cylinder 2, and mixed gas of helium and nitrogen were blown onto the bare optical fiber 11 inside this cooling cylinder 2 to cause a change in the bare optical fiber 11. At this time, the temperature of the bare optical fiber 11 was measured using an optical fiber temperature measuring instrument (Ircon, Model CHF-7000) at a location 25 cm directly above an optical fiber entrance of a coating material in the coating apparatus 4. The outer diameter of the bare optical fiber 11 after cooling was 125 µm. Next, this bare optical fiber 11 was introduced into the coating material in the coating apparatus 4, a coating material that forms the coating was coated onto its surface, the bare optical fiber 11 that was coated with the coating material was introduced into a coating material curing apparatus 7, and the coating material was cured by irradiating with ultraviolet rays to form the coating and obtain optical fiber 12 having an outer diameter of 250 µm.

An ultraviolet-cured resin including 0.5 wt% of silane coupling agent has been added was used for the coating material. In addition, the drawing speed was 1200 m/min.

In order to evaluate the adherence between the bare optical fiber 11 and coating of the optical fiber 12 obtained in this manner, the pull out force when the bare optical fiber 11 was pulled out of the optical fiber 12 was measured.

As shown in FIG. 2, the pull out force was measured by placing the test optical fiber 12 adjusted to a length of the coating of 5 mm in a V-groove 21 of a clamping jig 20, and fixing the entire length of the coating in the V-groove 21 with high-strength adhesive. Next, the bare optical fiber 11 that was exposed by removing the coating was pulled downward in the vertical direction at a pulling speed of 3 mm/min to pull out the bare optical fiber 11 from the coating. The maximum value of the load applied to the bare optical fiber 11 at that time was taken to be the pull out force. The load applied to the bare optical fiber 11 was detected with a load cell using a tension tester for pulling out the bare optical fiber 11.

The number (n) of samples for which pull out force was measured at each temperature of the bare optical fiber 11 prior to being introduced into the coating material in the coating apparatus 4 was n = 15. The measured temperatures of the bare optical fiber 11, the average values of pull out force and the status of the optical fiber 12 drawing conditions are shown in Table 1.

**Table 1**

| Temperature of bare optical fiber (°C) | pull out force (gf/mm) | Status of optical fiber during drawing |
|---|---|---|
| 60 | 80 | Bubbles trapped in coating |
| 70 | 100 | No problems |
| 80 | 123 | No problems |
| 90 | 158 | No problems |
| 100 | 170 | No problems |
| 110 | 199 | No problems |
| 120 | ― | Unable to be coated, difficulty in adjusting eccentricity |

### Embodiment 2

With the exception of using an ultraviolet-cured resin to which 0.1 wt% of silane coupling agent had been added for the coating material that forms the coating, the optical fiber 12 was manufactured in the same manner as Embodiment 1, and in order to evaluate the adherence between the bare optical fiber 11 and the coating of the resulting optical fiber 12, the pull out force was measured when the bare optical fiber 11 was pulled out of the optical fiber 12. Those results are shown in Table 2.

**Table 2**

| Temperature of bare optical fiber (°C) | pull out force (gf/mm) | Status of optical fiber during drawing |
|---|---|---|
| 60 | 45 | Air bubbles trapped in coating |
| 70 | 50 | No problems |
| 80 | 55 | No problems |
| 90 | 57 | No problems |
| 100 | 60 | No problems |
| 110 | 70 | No problems |
| 120 | ― | Unable to be coated, difficulty in adjusting eccentricity |

On the basis of the results of Tables 1 and 2, if the temperature of the bare optical fiber 11 prior to being introduced into the coating material in the coating apparatus 4 between 70 and 110°C, it was confirmed that drawing had no problem, and the optical fiber 12 which has uniform coating was able to be manufactured. In addition, if the temperature is within this range, it was confirmed that the higher temperature of the bare optical fiber 11, has the bigger adhesive strength between the bare optical fiber 11 and coating.

However, if the temperature of the bare optical fiber 11 prior to being introduced into the coating apparatus 4 is 60°C, bubbles ended up being trapped in the coating. In addition, if the temperature of the bare optical fiber 11 is 120°C, the thickness of the coating became irregular, and it was not possible form a stable coating, thereby making it difficult to adjust eccentricity in the optical fiber 12.

As has been explained above, according to the manufacturing method of optical fiber of the present invention, the reactivity of a silane coupling agent added to the coating material that forms the coating of the optical fiber is improved, the coupling reaction between the silane coupling agent and the surface of the bare optical fiber composed of silica glass is promoted, and the adhesive strength between them is adequately increased. In addition, since the coating material is coated onto the bare optical fiber in contact with its surface, it becomes difficult for bubbles to become trapped in the coating. Moreover, since the coating material is uniformly coated on the surface of the bare optical fiber, there is no occurrence of eccentricity in the optical fiber. Thus, the manufacturing method of optical fiber of the present invention allows high-speed drawing to be applied to optical fiber.

## Claims

1. A manufacturing method of optical fiber comprising steps of:
introducing a bare optical fiber composed of silica glass into a coating material coating apparatus,
coating a coating material to including a coupling agent onto said bare optical fiber within said covering material coating apparatus, and
curing a coating said coating material; wherein,
temperature of said bare optical fiber prior to introduction into said coating material coating apparatus between 60 and 110°C.

2. A manufacturing method of optical fiber according to claim 1 wherein, a cooling step that cools said bare optical fiber is provided prior to introduction into said coating material coating apparatus.
